# EUROPÄISCHE PATENTSCHRIFT

(11) **EP 2 379 897 B1**
(45) Veröffentlichungstag und Bekanntmachung des Hinweises auf die Patenterteilung: **06.03.2013**
(21) Anmeldenummer: 09812418.3
(22) Anmeldetag: 23.12.2009
(51) Int. Cl.: F16B 39/02

(54) **SELBSTSICHERNDE SCHRAUBVERBINDUNG**
SELF-LOCKING SCREW CONNECTION
ASSEMBLAGE PAR VIS AUTOBLOQUANT

(30) Priorität: 16.01.2009 DE 102009005334
(43) Veröffentlichungstag der Anmeldung: 26.10.2011
(73) Patentinhaber: Neumayer Tekfor Holding GmbH, 77756 Hausach (DE)
(72) Erfinder: SAVOY, Juliano, 13.214-597 Jundiai - SP (BR); SIGOLI, Paulo, César, 13.218-450 Jundiai - SP (BR); DE SOUZA, Mauro, Moraes, 13.209-020 Jundiai - SP (BR)
(86) Internationale Anmeldenummer: PCT/DE2009/001802
(87) Internationale Veröffentlichungsnummer: WO 2010/081450

(56) Entgegenhaltungen:
- DE-A1-102004 030 965
- DE-U1- 8 913 421
- US-A1- 2003 044 255

## Beschreibung

Die Erfindung betrifft eine selbstsichernde Schraubverbindung mit einem Schraubenabschnitt und einer auf diesem selbstgesichert aufgenommenen Mutter.

Selbstsichernde Schraubverbindungen sind seit langem bekannt. Beispielsweise kann das Gewinde zwischen Schraubenabschnitt und Mutter in seiner Mobilität beispielsweise durch einen Kunststoffeinsatz eingeschränkt werden, was zu einer Schwergängigkeit der Schraubverbindung führt. Alternativ kann ein Splint im Schraubenabschnitt vorgesehen werden, der ein Lösen der Mutter vom Schraubenabschnitt nur in begrenztem Bereich verhindert und zusätzliche Arbeitsgänge zur Befestigung des Splints erfordert. Selbstsichernde Muttern, die mittels einer drehfest an dem Schraubenabschnitt aufgenommenen Zwischenscheibe fixiert werden, indem zwischen Mutter und Distanzscheibe ein Formschluss zwischen einem Profil der Distanzscheibe und dem Mehrkant der Mutter hergestellt wird, erfordern in der Regel nach dem Verschrauben der Mutter auf dem Schraubabschnitt zusätzliche Arbeitsschritte oder sind bei einem Verschnappen während der Verschraubung nur schwierig wieder zu lösen. Oft ist bei selbstsichernden Schraubverbindungen lediglich eine unzureichende Auflösung der vorzusehenden Vorspannung oder eines einzustellenden Axialspiels der Mutter erzielbar. Eine Sicherungsscheibe für eine Wellenmutter beschreibt beispielsweise die Offenlegungsschrift DE 10 2004 030 965 A1.

Aufgabe der Erfindung ist daher, eine selbstsichernde Schraubverbindung und eine Baueinheit mit dieser Schraubverbindung vorzuschlagen, die leicht zu montieren, einfach herzustellen und genau einstellbar sind.

Die Aufgabe wird durch eine Schraubverbindung mit einem Schraubenabschnitt, einer auf diesem verschraubten Mutter mit einem Mehrkant und einer gegenüber dem Schraubenabschnitt verdrehgesicherten, auf der Mutter verdrehbar aufgenommenen Zwischenscheibe mit einem über deren Umfang angeordneten Raster sowie zumindest einer mit dem Raster einen Formschluss bildenden Klinke gelöst, wobei die zumindest eine Klinke aus einem elastisch gegenüber einer Fläche des Mehrkants federnd aufgenommenen Blechteil gebildet ist. Unter einem Schraubenabschnitt ist ein mit einem Außengewinde versehener Stift zu verstehen, auf den die selbstsichernd ausgestaltete Mutter aufgeschraubt wird. Dabei kann der Stift eine Schraube mit Kopf bilden oder an einem komplexen Bauteil vorgesehen sein, an dem ein weiteres Bauteil mittels der Mutter befestigt wird. Beispielsweise kann eine Achse oder ein Achsschenkel den besagten Schraubenabschnitt aufweisen, an dem ein Wälzlager wie Rollenlager mit Kegelrollen befestigt wird.

Als besonders vorteilhaft hat sich gezeigt, wenn mehrere Klinken vorgesehen werden, die aus einem Blechteil gebildet sind und sich axial entlang der jeweils zugehörigen Fläche des Mehrkants erstrecken und an deren freiem Ende ein Eingriffsprofil wie Haken aufweisen, der mit dem Raster einen Formschluss bilden kann. Beispielsweise kann das Blechteil, das gestanzt und gebogen in die entsprechende Form gebracht werden kann, einen Ringkragen aufweisen, durch den der Schraubenabschnitt mit Spiel geführt wird und der an der der Zwischenscheibe abgewandten Stirnseite der Mutter befestigt ist, indem beispielsweise ein hierfür vorgesehener Bord oder entsprechende axial ausgebildete, über den Umfang verteilte Stege umgebördelt werden. Auf diese Weise kann das Blechteil beispielsweise bei einem einen Sechskant bildenden Mehrkant eine bis sechs, vorzugsweise drei bis sechs Klinken aufweisen, die entlang der Flächen des Sechskants umgelegt werden, wobei durch das Umlegen eine Vorspannung in der Weise eingestellt wird, das die Klinken zu den Flächen im nicht verspannten Zustand einen Anstellwinkel besitzen, der ausreicht, um mit ihren endseitigen Profilen in das Raster einzugreifen und einen Formschluss mit diesem zu bilden. Wird auf den Mehrkant das Schraubwerkzeug, beispielsweise eine Schraubnuss oder ein Steckschlüssel aufgebracht, werden die Klinken an die Fläche des Mehrkants angelegt und der Formschluss zum Raster wird freigegeben, so dass die Mutter in einfacher Weise auf den Schraubenabschnitt gedreht oder wieder von diesem entfernt werden kann.

Als besonders vorteilhaft hat sich erwiesen, wenn in den Flächen des Mehrkants der Mutter Ausschnitte vorgesehen sind, in die die Klinken bei einer Verspannung durch das Schraubwerkzeug eintauchen können, wodurch sich ein effektives Tragbild des Schraubwerkzeugs für den Mehrkant bildet. Weiterhin kann in den Klinken eine Sicke, beispielsweise eine radial aus der Klinkenfläche erhabene Welle, vorgesehen werden, die gegebenenfalls ein Spiel zwischen dem Schraubwerkzeug ausgleicht und selbst bei unvollständigem Einführen des Mehrkants in das Schraubwerkzeug eine vollständige Trennung des Formschlusses zwischen Klinken und Raster ermöglicht.

Zur Ausbildung des Rasters der Zwischenscheibe kann diese an ihrem Außenumfang verteilte Zungen aufweisen, die nach radial außen gerichtet sind und um einen kreisförmigen Fuß oder Flansch der Mutter umgelegt sind, so dass die Zwischenscheibe unter Ausbildung des Rasters verdrehbar und verliersicher auf der Mutter aufgenommen ist. Bei nicht aufgesetztem Schraubwerkzeug entspannen sich die Klinken nach radial außen in die durch die Zungen gebildeten Zwischenräume des Rasters und verhindem damit eine Verdrehung der Zwischenscheibe gegenüber der Mutter. Bei Ansetzen des Schraubwerkzeugs werden die Klinken in die Ausschnitte der Flächen des Mehrkants elastisch verspannt. Das Raster kann auch durch in einen um den Fuß der Mutter eingestanzte, über den Umfang verteilte Löcher dargestellt werden.

Nach einem erfinderischen Gedanken ist bei Verwendung mehrerer Klinken die Teilung des Rasters nicht identisch mit einer Teilung der Klinken und auch kein Vielfaches dieser. Dies bedeutet, dass die Verteilung der Klinken über den Umfang in Abstimmung mit der Anzahl der Zwischenräume des Rasters so ausgelegt ist, dass zumindest eine der Klinkern nicht einrastet und zwischen zwei Zwischenräumen verbleibt und bei einer geringen Winkelverdrehung in den nächsten Zwischenraum einrastet. Auf diese Weise kann eine höhere Auflösung des Rastwinkels der Mutter gegenüber der Schraube und damit eine hohe Auflösung des A-xialabstands der Mutter in deren von der Zwischenscheibe gesperrten Zustand zu dem zu befestigenden Bauteil erzielt werden. Beispielsweise kann bei einem Raster mit siebzehn Zwischenräumen und einem Sechskant mit sechs Klinken eine Auflösung des Verdrehwinkels von einer Rastung einer Klinke zur Rastung der nächsten Klinke im Raster von ca. 3,5° erzielt werden. Auf diese Weise kann beispielsweise ein Lager auf einer Achse in nahezu idealer Weise vorgespannt werden.

Die Fixierung der Mutter gegenüber dem Schraubenabschnitt erfolgt durch eine drehfeste Aufnahme der Zwischenscheibe auf dem Schraubenabschnitt. Hierzu kann beispielsweise der Schraubenabschnitt eine Abflachung aufweisen, an dem eine aus der Öffnung der Zwischenscheibe ausgesparte Gegenfläche anliegt oder in dem Schraubenabschnitt eine Längsnut vorgesehen sein, in die eine Nase der Zwischenscheibe eingreift.

Die Aufgabe wird weiterhin durch eine Baueinheit mit einer Schraubverbindung wie vorgeschlagen gelöst. Die Baueinheit enthält dabei einen an einem Widerlager angeordneten Lagerbolzen mit dem Schraubenabschnitt, ein auf den Lagerbolzen aufgefädeltes Bauteil und die mit der als Gegenlager axial auf dem Schraubenabschnitt durch die Positionierung der Klinken gegenüber dem Raster auf einem justierten Abstand zum Widerlager aufgenommene Mutter. Das aufgefädelte Bauteil kann insbesondere ein Wälzlager, beispielsweise ein Rollenlager mit Kegelrollen sein. Die Baueinheit kann als Achseinheit mit Radlager zur Aufnahme eines Rades eines Kraftfahrzeugs dienen.

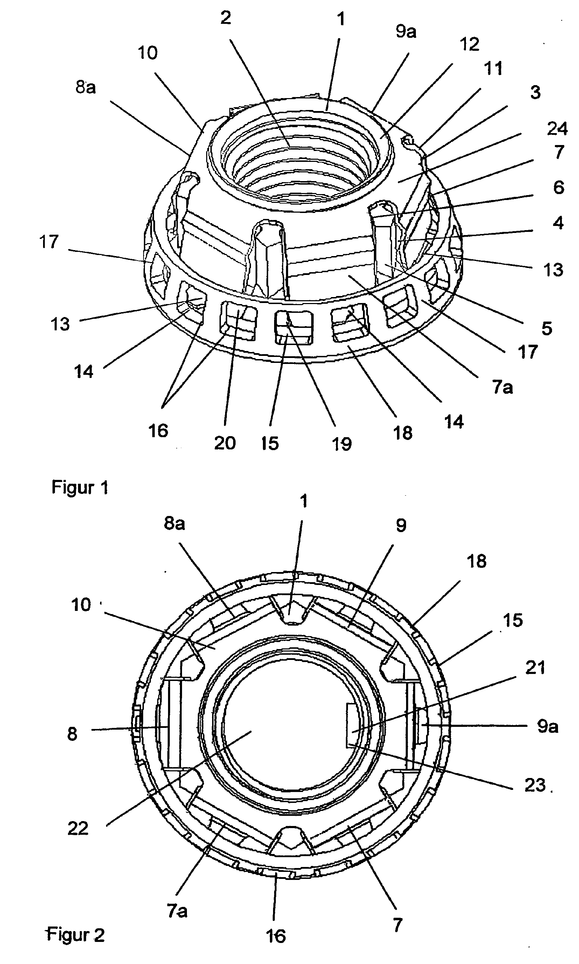

Die Erfindung wird anhand der in den Figuren 1 und 2 dargestellten Ausführungsbeispiele näher erläutert. Dabei zeigen:
- Figur 1: eine Ansicht einer selbstsichernden Mutter der Schraubverbindung von schräg oben
- und Figur 2: eine Draufsicht der in Figur 1 dargestellten selbstsichernden Mutter.

Figur 1 zeigt die selbstsichernde Mutter 1 der nicht komplett dargestellten Schraubverbindung mit dem Innengewinde 2, in das der Schraubenabschnitt eingeschraubt wird. In dem gezeigten Ausführungsbeispiel ist ein Mehrkant 3 zur Verdrehung der Mutter 1 mittels eines Schraubwerkzeugs als Sechskant mit Seitenflächen 4, 5 ausgebildet, wobei die Seitenflächen 4, 5 jeweils einen Ausschnitt 6 enthalten, in die die Klinken 7, 7a, 6, 8a, 9 ,9a versenkbar sind. Die Klinken 7, 7a, 8, 8a, 9 ,9a sind an einem gemeinsamen Ringkragen 10 befestigt beziehungsweise einteilig aufgenommen, der an der Stirnseite 11 der Mutter 1 fest mit dieser verbunden ist. In dem gezeigten Ausführungsbeispiel ist der Ringkragen 10 an einem Ringsteg 12 zentriert, der zur axialen Fixierung des Ringkragens 10 umgebördelt ist.

Der Ringkragen 10 mit den Klinken 7, 7a 8, 8a 9, 9a bildet ein einteiliges Bauteil 24 und ist aus elastischem Material wie Federblech hergestellt. Die Klinken 7, 7a 8, 8a 9, 9a sind dabei so umgelegt, dass sie unter Vorspannung in die Ausschnitte 6 versenkt werden und nach Aufhebung der Vorspannung an ihren freien Enden 13 radial ausschwenken. Eine quer über die Klinken 7, 7a, 7b, 8, 8a, 9, 9a verlaufende Sicke verbessert dabei die Verlagerung der Klinken durch das Schraubwerkzeug selbst bei Spiel oder nicht bis auf den Grund des Mehrkants 3 eingesetztem Schraubwerkzeug. Die freien Enden 13 sind radial abgewinkelt und weisen Nasen 14 auf, die abhängig von einer Verdrehung des Rasters 15 gegenüber der Mutter 1 in Zwischenräume 16 des Rasters 15 radial eingreifen. Das Raster 15 wird aus radial und über den Umfang verteilten, an der Zwischenscheibe 18 vorgesehenen Stege 17 gebildet, die axial umgelegt werden und damit eine Verliersicherung und Zentrierung der Zwischenscheibe 18 der Mutter 1 bilden. Die Zwischenscheibe 18 verbleibt dabei gegenüber dem Fuß 19 der Mutter 1 verdrehbar und ist drehfest auf dem Schraubenabschnitt fixiert. Die Stege 17 können beispielsweise durch axiales Umlegen des äußeren, mit den nötigen Ausstanzungen versehen Umfangs der Zwischenscheibe 18 oder durch axiales Umlegen von radial am Außenumfang der Zwischenscheibe 18 angeordneten Zungen dargestellt werden.

Die freien Enden 13 der Klinken 7, 7a, 8, 8a, 9, 9a sind in einem Ausschnitt 20 des Fußes 19 radial verlagerbar in Umfangsrichtung abgestützt, so dass bereits das Einrasten einer Klinke 7, 7a, 8, 8a, 9, 9a in einen Zwischenraum 16 eine Verdrehsicherung der Schraubverbindung gewährleisten kann. In dem gezeigten Ausführungsbeispiel ist die Klinke 8 in dem durch zwei benachbarte Stege 17 gebildeten Zwischenraum 16 eingerastet und blockiert damit eine Verdrehung der Mutter 1 gegenüber der Zwischenscheibe 18. Durch die drehfeste Aufnahme der Zwischenscheibe 18 auf dem Schraubenabschnitt ist eine Verdrehsicherung der Schraubverbindung gegeben. Durch die Rasterung des Rasters 15 in Form der Anzahl der Zwischenräume 16 rasten die Klinken 7, 7a, 8, 8a 9, 9a nicht gleichzeitig in die Zwischenräume 16 ein. Vielmehr kann die Rasterung so ausgelegt werden, dass lediglich eine Nase 14 der Klinken 7, 7a 8, 8a 9, 9a gleichzeitig einrastet, so dass bereits bei kleinen Verdrehwinkeln ein erneutes Verrasten einer Nase 14 einer Klinke 7, 7a, 8, 8a, 9, 9a mit einem Zwischenraum 16 des Rasters 15 erfolgt und damit die Auflösung eines Rastwinkels verbessert wird. Unabhängig von der Steigung des Innengewindes 2 kann damit das axiale Spiel beziehungsweise eine Vorspannung der Mutter 1 gegenüber einem zwischen einem Widerlager und der Mutter 1 aufgefädelten Bauteil wesentlich feiner eingestellt werden. Die Klinke 7a zeigt einen zwischen den Stegen 17 gleitenden Zustand der Nase 14. Es versteht sich, dass bei einer Auflösung des Rastwinkels geringerer Anforderung nicht alle Seitenflächen 5 mit Klinken versehen werden müssen. Im Falle der dargestellten Verwendung von sechs Klinken 7, 7a, 8, 8a, 9, 9a ergibt sich beispielsweise bei einer Anzahl von siebzehn Zwischenräumen eine Auflösung des Rast- oder Verdrehwinkels von ca. 3,5° ergeben.

Das Verschrauben der Mutter 1 auf dem Schraubenabschnitt erfolgt mittels eines Schraubwerkzeugs, das beispielsweise durch Aufstecken auf den Mehrkant 3 die Klinken gegen in die Ausschnitte 6 verlagert, so dass die Mutter 1 unter Aufwendung nur des üblichen Schraubwiderstands auf den Schraubenabschnitt gedreht werden kann. Die Justierung gegenüber dem einzuspannenden Bauteil kann in an sich bekannte Weise beispielsweise mittels Einstellung des Drehmoments erfolgen. Nach dem Lösen des Schraubwerkzeugs verrastet die einem Zwischenraum 16 nächstliegende Nase 14 ein und fixiert die Mutter 1 gegenüber dem Schraubenabschnitt mit der durch Anzahl der Klinken und Zwischenräume eingestellten Genauigkeit.

Figur 2 zeigt die Mutter 1 der Figur 1 in Draufsicht. Aus der Figur 2 werden die unterschiedlichen Positionen der Klinken 7, 7a 8, 8a, 9, 9a gegenüber dem Raster 15 deutlich. Während sich Klinke 8 im eingerasteten Zustand befindet, wird bei weiterer Verdrehung der Mutter im Uhrzeigersinn die Klinke 8a als nächste einrasten, während der Verdrehweg der Klinke 7a am weitesten ist, um in den Zwischenraum 16 einzurasten.

Figur 2 zeigt den Schraubenabschnitt 22, der eine Längsnut 23 aufweist, in die radial die Nase 21 der Zwischenscheibe 18 eingreift, so dass die Zwischenscheibe 18 drehfest an dem Schraubenabschnitt 22 aufgenommen ist.

## Patentansprüche

1. Schraubverbindung mit einem Schraubenabschnitt (22), einer auf diesem verschraubten Mutter (1) mit einem Mehrkant (3) und einer gegenüber dem Schraubenabschnitt (22) verdrehgesicherten, auf der Mutter (1) verdrehbar aufgenommenen Zwischenscheibe (18) mit einem über deren Umfang angeordneten Raster (15) sowie zumindest einer mit dem Raster (15) einen Formschluss bildenden Klinke (7, 7a, 8, 8a, 9, 9a), **dadurch gekennzeichnet, dass** die zumindest eine Klinke (7, 7a, 8, 8a, 9, 9a) aus einem elastisch an der Mutter (1) federnd aufgenommenen Blechteil gebildet ist.

2. Schraubverbindung nach Anspruch 1, **dadurch gekennzeichnet, dass** mehrere, jeweils an einer Seitenfläche (4) des Mehrkants (3) angeordnete Klinken (7, 7a, 8, 8a, 9, 9a) einteilig aus einem Bauteil (24) gebildet sind.

3. Schraubverbindung nach Anspruch 1oder 2, **dadurch gekennzeichnet, dass** das Bauteil (24) mittels eines Ringkragens (10) an der der Zwischenscheibe (18) gegenüberliegenden Stirnseite (11) aufgenommen ist.

4. Schraubverbindung nach Anspruch 2 oder 3, **dadurch gekennzeichnet, dass** die zumindest eine Klinke (7, 7a, 8, 8a, 9, 9a) in einem Ausschnitt (6) der Seitenfläche (4) des Mehrkants (3) im verspannten Zustand zumindest annähernd bündig untergebracht ist.

5. Schraubverbindung nach einem der Ansprüche 1 bis 4, **dadurch gekennzeichnet, dass** an einem Außenumfang der Zwischenscheibe (18) über den Umgang verteilte, nach radial außen gerichtete Stege um einen kreisförmigen Fuß (19) der Mutter (1) umgelegt sind und das Raster (15) bilden.

6. Schraubverbindung nach einem der Ansprüche 1 bis 5, **dadurch gekennzeichnet, dass** die Anzahl der Klinken (7, 7a, 8, 8a, 9, 9a) ungleich der Anzahl oder einem Vielfachen der Anzahl von im Raster (15) angeordneten Zwischenräumen (16) ist.

7. Schraubverbindung nach Anspruch 6, **dadurch gekennzeichnet, dass** zumindest eine Klinke (7, 7a, 8, 8a, 9, 9a) weniger als die Anzahl der Klinken (7, 7a, 8, 8a, 9, 9a) gleichzeitig in die Zwischenräume (16) des Rasters (15) einrastet.

8. Schraubverbindung nach einem der Ansprüche 1 bis 7, **dadurch gekennzeichnet, dass** der Schraubenabschnitt zumindest eine Abflachung aufweist, an der eine Gegenfläche der Zwischenscheibe anliegt.

9. Schraubverbindung nach einem der Ansprüche 1 bis 7, **dadurch gekennzeichnet, dass** der Schraubenabschnitt (22) zumindest eine Längsnut (23) aufweist, in die eine Nase (21) der Zwischenscheibe (18) eingreift.

10. Schraubverbindung nach einem der Ansprüche 1 bis 9, **dadurch gekennzeichnet, dass** die zumindest eine Klinke (7, 7a, 8, 8a, 9, 9a) im unverspannten Zustand einen Formschluss mit dem Raster (15) bildet.

11. Schraubverbindung nach einem der Ansprüche 1 bis 10, **dadurch gekennzeichnet, dass** die zumindest eine Klinke (7, 7a, 8, 8a, 9, 9a) durch eine auf den Mehrkant (3) einwirkendes Schraubwerkzeug gegen die Seitenflächen (4, 5) des Mehrkants(3) verspannt wird.

12. Baueinheit mit einer Schraubverbindung nach einem der Ansprüche 1 bis 11 mit einem an einem Widerlager angeordneten Lagerbolzen mit dem Schraubenabschnitt (22), einem auf den Lagerbolzen aufgefädelten Bauteil und der als Gegenlager axial auf dem Schraubenabschnitt (22) durch die Positionierung der zumindest einen Klinke (7, 8, 9) gegenüber dem Raster (15) auf einem justierten Abstand zum Widerlager aufgenommenen Mutter (1).

13. Baueinheit nach Anspruch 12, **dadurch gekennzeichnet, dass** das aufgefädelte Bauteil ein Wälzlager ist.

## Claims

1. Screw connection comprising a screw section (22), a nut (1) with polygonal sides (3) screwed thereon, an intermediate washer (18) secured against rotation relative to the screw section (22) and rotatably mounted on the nut (1), said intermediate washer comprising a grid (15) disposed on the circumference thereof, and at least one catch (7, 7a, 8, 8a, 9, 9a) forming a positive fit with the grid (15), **characterized in that** the at least one catch (7, 7a, 8, 8a, 9, 9a) is made of a resilient sheet-metal component mounted elastically on the nut (1).

2. Screw connection according to claim 1, **characterized in that** multiple catches (7, 7a, 8, 8a, 9, 9a), each disposed on a respective lateral surface (4) of the polygonal nut (3), are integrally formed from a single component (24).

3. Screw connection according to claims 1 or 2, **characterized in that** the component (24) is mounted by means of an annular collar (10) connected to the front side of the nut (11) opposite the intermediate washer (18).

4. Screw connection according to claims 2 or 3, **characterized in that** the at least one catch (7, 7a, 8, 8a, 9, 9a) is at least substantially flush mounted in a recess (8) in the respective lateral surface (4) of the polygonal nut (3) when the catch is compressed.

5. Screw connection according to one of the claims 1 to 4, **characterized in that** radially outwardly oriented tongues are distributed around the outer circumference of the intermediate washer (18) and bent back around a circular base (19)of the nut (1) to form the grid (15).

6. Screw connection according to one of the claims 1 to 5, **characterized in that** the number of catches (7, 7a, 8, 8a, 9, 9a) is not equal to the number or a multiple of the number of intermediate gaps (16) in the grid (15).

7. Screw connection according to claim 6, **characterized in that** at least one catch (7, 7a, 8, 8a, 9, 9a) less than the number of catches (7, 7a, 8, 8a, 9, 9a) engages simultaneously in the intermediate gaps (16) in the grid (15).

8. Screw connection according to one of the previous claims 1 - 7, **characterized in that** the screw section has at least one flat portion against which a mating surface of the intermediate washer abuts.

9. Screw connection according to one of the previous claims 1 - 7, **characterized in that** the screw section (22) comprises at least one longitudinal groove (23) in which a projection (21) on the intermediate washer (18) engages.

10. Screw connection according to one of the previous claims 1 - 9, **characterized in that** the at least one catch (7, 7a, 8, 8a, 9, 9a) forms a positive lock with the grid (15) when the catch is not compressed.

11. Screw connection according to one of the previous claims 1 - 10, **characterized in that** the at least one catch (7, 7a, 8, 8a, 9, 9a) is compressed against the lateral surfaces (4, 5) of the polygonal nut (3) using a screwing tool.

12. Structural unit comprising a screw connection according to one of the claims 1 - 11, wherein the screw section (22) comprises a bearing bolt disposed on an abutment, a component is slid onto the bearing bolt and a nut (1) is mounted on the screw section (22) as a counter bearing and locked in position axially at a desired distance 2/2 from the abutment by the engagement of the at least one catch (7, 8, 9) in the grid (15).

13. Structural unit according to claim 12, **characterized in that** the component to be mounted is a rolling bearing.

## Revendications

1. Assemblage par vis, avec une partie vis (22), avec un écrou (1) vissé sur celle-ci et doté d'un multipans (3), avec une rondelle intermédiaire (18) bloquée en rotation par rapport à la partie vis (22), reçue à rotation sur l'écrou (1) et dotée d'un rochet (15) disposé sur sa périphérie, et avec au moins un cliquet (7, 7a, 8, 8a, 9, 9a) formant avec le rochet (15) un assemblage par complémentarité de forme,
**caractérisé en ce que** le cliquet au moins unique (7, 7a, 8, 8a, 9, 9a) est formé par une pièce de tôle reçue élastiquement à effet de ressort sur l'écrou (1).

2. Assemblage par vis selon la revendication 1, **caractérisé en ce que** plusieurs cliquets (7, 7a, 8, 8a, 9, 9a), respectivement disposés sur une surface latérale (4) du multipans (3), sont formés d'un seul tenant à partir d'un même élément (24).

3. Assemblage par vis selon la revendication 1 ou 2, **caractérisé en ce que** l'élément (24) est reçu au moyen d'un collet annulaire (10) sur le côté frontal (11) opposé à la rondelle intermédiaire (18).

4. Assemblage par vis selon la revendication 2 ou 3, **caractérisé en ce que** le cliquet au moins unique (7, 7a, 8, 8a, 9, 9a) est logé, au moins approximativement en affleurement dans l'état serré, dans une découpure (6) de la surface latérale (4) du multipans (3).

5. Assemblage par vis selon l'une des revendications 1 à 4, **caractérisé en ce que** des pattes dirigées radialement vers l'extérieur sont disposées tout autour d'une embase circulaire (19) de l'écrou (1) sur une périphérie extérieure de la rondelle intermédiaire (18) en étant réparties sur la périphérie, et forment le rochet (15).

6. Assemblage par vis selon l'une des revendications 1 à 5, **caractérisé en ce que** le nombre de cliquets (7, 7a, 8, 8a, 9, 9a) est différent du nombre ou d'un multiple du nombre d'espaces intermédiaires (16) disposés dans le rochet (15).

7. Assemblage par vis selon la revendication 6, **caractérisé en ce que** les cliquets (7, 7a, 8, 8a, 9, 9a) s'enclenchent simultanément dans les espaces intermédiaires (16) du rochet (15) en un nombre inférieur d'au moins un au nombre de cliquets (7, 7a, 8, 8a, 9, 9a).

8. Assemblage par vis selon l'une des revendications 1 à 7, **caractérisé en ce que** la partie vis présente au moins un méplat contre lequel s'applique une surface antagoniste de la rondelle intermédiaire.

9. Assemblage par vis selon l'une des revendications 1 à 7, **caractérisé en ce que** la partie vis (22) présente au moins une rainure longitudinale (23) dans laquelle s'engage un ergot (21) de la rondelle intermédiaire (18).

10. Assemblage par vis selon l'une des revendications 1 à 9, **caractérisé en ce que** le cliquet au moins unique (7, 7a, 8, 8a, 9, 9a) forme un assemblage par complémentarité de forme avec le rochet (15) dans l'état non serré.

11. Assemblage par vis selon l'une des revendications 1 à 10, **caractérisé en ce que** le cliquet au moins unique (7, 7a, 8, 8a, 9, 9a) est serré contre les surfaces latérales (4, 5) du multipans (3) par un outil de vissage agissant sur le multipans (3).

12. Unité structurelle avec un assemblage par vis selon l'une des revendications 1 à 11, avec un axe de palier disposé sur un contre-appui et doté de la partie vis (22), avec un élément enfilé sur l'axe de palier, et avec l'écrou (1) qui, par le positionnement du cliquet au moins unique (7, 8, 9) par rapport au rochet (15), est reçu en tant que butée axialement sur la partie vis (22) à une distance ajustée par rapport au contre-appui.

13. Unité structurelle selon la revendication 12, **caractérisée en ce que** l'élément enfilé est un palier à roulement.
